Europäisches Patentamt

European Patent Office

Office européen des brevets

(19)

(11) Veröffentlichungsnummer: **0 384 307**
**A1**

(12) **EUROPÄISCHE PATENTANMELDUNG**

(21) Anmeldenummer: **90103002.3**

(51) Int. Cl.⁵: **H02J 13/00**

(22) Anmeldetag: **16.02.90**

(30) Priorität: **20.02.89 DE 3905114**

(43) Veröffentlichungstag der Anmeldung:
**29.08.90 Patentblatt 90/35**

(84) Benannte Vertragsstaaten:
**CH DE FR GB IT LI SE**

(71) Anmelder: **Licentia Patent-Verwaltungs-GmbH**
**Theodor-Stern-Kai 1**
**D-6000 Frankfurt/Main 70(DE)**

(72) Erfinder: **Dehof, Werner, Dipl.-Ing.**
**Pfalzstrasse 4**
**D-6800 Mannheim 51(DE)**

(74) Vertreter: **Lertes, Kurt, Dr. et al**
**Licentia Patent-Verwaltungs-GmbH**
**Theodor-Stern-Kai 1**
**D-6000 Frankfurt/M 70(DE)**

(54) **Verfahren zum Erzeugen eines digitalen Abbilds einer mindestens eine Sammelschiene und Schaltgeräte enthaltenden Schaltanlage in einem elektrischen Energieverteilungsnetz.**

(57) Gegenstand der Erfindung ist ein Verfahren zum Erzeugen eines digitalen Abbilds einer mindestens eine Sammelschiene und Schaltgeräte enthaltenden Schaltanlage in einem elektrischen Energieverteilungsnetz.

Den Schaltgeräten sind jeweils Datensätze zugeordnet, die für jede Anschlußseite gesondert eine individuelle Bezeichnung des Schaltgeräts, dessen Typ aus einer in der Schaltanlage eingesetzten unterschiedlichen Auswahl von Typen, dessen Schaltzustand, die Zuordnung zu einer Meßstelle, die Zuordnung zu einem in Abhängigkeit von Meßstellenwert betätigbaren Kommando-Schaltgerät, die Zuordnung zu dem im Zuge der Leitung nächstliegenden Verzweigungsknoten und die Zuordnung dieses Knotens zu einem zentralen Knoten enthalten. Für die Verzweigungsknoten sind Listen mit an diese angeschlossenen Meßstellen und den zugehörigen Kommando-Schaltgeräten sowie den Verbindungen zu den übergeordneten zentralen Verzweigungsknoten vorgesehen. Eine Liste ist mit dem Verzweigungsknoten vorgesehen, die die Meßstellen mit den zugeordneten Kommando-Schaltgeräten enthält. Bei Schaltzustandsänderungen werden die entsprechenden Eintragungen in den Datensätzen einschließlich der hiervon ausgehenden Änderungen der Eintragungen in der Liste der Verzweigungsknoten und/oder zentralen Verzweigungsknoten berücksichtigt.

EP 0 384 307 A1

FIG.5

## Verfahren zum Erzeugen eines digitalen Abbilds einer mindestens eine Sammelschiene und Schaltgeräte enthaltenden Schaltanlage in einem elektrischen Energieverteilungsnetz

Die Erfindung bezieht sich auf ein Verfahren zum Erzeugen eines digitalen Abbilds einer mindestens eine Sammelschiene und Schaltgeräte enthaltenden Schaltanlage in einem elektrischen Energieverteilungsnetz.

Zum Schutz von Sammelschienen werden spezielle Schutzeinrichtungen eingesetzt. Ihre Funktionen bestehen aus drei Hauptfunktionen:

1. Bereitstellen, welche Messstellen und die dazugehörenden kurzschlussfesten Schaltgeräte zu den jeweiligen Schutzbereichen zählen: das Sammelschienenabbild.

2. Überwachen, ob ein Fehlerfall eingetreten ist oder nicht: die Schutzrechnung;

3. Auslösekommandos erstellen und ausgeben;

Die grundlegende Aufgabe des Sammelschienenabbildes ist die Zuordnung der Abzweigströme einer Schaltanlage zu den Schutzbereichen und die Angabe, welche Schaltgeräte zum Abschalten eines Fehlers im jeweiligen Schutzbereich auszulösen sind. Unter Schutzbereich ist ein einzelner, galvanisch trennbarer Sammelschienenabschnitt oder eine Zusammenschaltung von mehreren Sammelschienenabschnitten zu verstehen. Die hierbei zu erreichenden Ziele sind:

- schneller Zugriff der Schutzrechnung auf die zusammengehörenden Messstellen;
- Unterstützung von Erweiterungen nach der Inbetriebnahme des Systems ohne erneute Projektierung bestehender Teile;
- Projektierungsfreundlichkeit; d.h. geringer zeitlicher Aufwand, keine speziellen Anforderungen an den Projekteur, die die Realisierungstechnik des Systems betreffen.

Der Erfindung liegt die Aufgabe zugrunde, ein Verfahren zum Erzeugen eines digitalen Abbilds einer mindestens eine Sammelschiene und Schaltgeräte enthaltenden Schaltanlage zu entwickeln, das bei Änderungen in den Zuordnungen zwischen Messstellen und kurzschlussfesten Schaltgeräten aufgrund von Schalterbetätigungen schnell aktualisiert werden kann

Die Aufgabe wird erfindungsgemäss durch die Merkmale im Kennzeichen des Patentanspruches 1 gelöst.

Bei dem im Anspruch 1 beschriebenen Verfahren ist die Erzeugung und Aktualisierung des digitalen "Sammelschienenabbilds" unabhängig von Verfahrensschritten für den Sammelschienenschutz. Vorteile der im Anspruch 1 angegebenen Massnahmen sind, dass

-die Messstellen nach Schutzbereichen sortiert angeboten werden;

-jeder Messstelle ein Leistungsschalter zugeordnet ist;

-die Zuordnungsvorschriften und der Konfiguration invariant bzgl. den Strukturen der Schaltanlage sind;

-die projektierten Abzweige im installierten System nach Bedarf des Betreibers aktiviert oder deaktiviert werden können.

-eingrenzbare Auswirkungen bei Änderungen von Schaltzuständen im Prozess

-dadurch: schnelle Aktualisierung des Sammelschienenabbildes

Das Prinzip der Erfindung zur Erstellung und Auswertung des "Sammelschienenabbildes" beruht auf der Isolierung von Prozessteilen als eigenständige, autarke Gebilde, die nach festgelegten, wenigen Typen klassifizierbar sind. Diese Grundelemente weisen im Prinzip jeweils zwei, der Struktur nach identische, Schnittstellen auf. Die Information, die in den Schnittstellen aktuell erhalten ist, ist durch die Eigenschaft des Grundelements und seinen aktuellen Zustand bestimmt. Die Grundelemente werden in zwei Typen (Typ 1 und Typ 2) unterschieden. Die Merkmale liegen in den Eigenschaften, die sie zur Verfügung stellen; die Schnittstellenbeschreibungen sind für beide gleich. Dabei sei das Grundelement Typ 1 das allgemeinere, der Typ 2 wird im weiteren als Bezugselement bezeichnet. Die Bezugselemente stellen im Vergleich zu den Grundelementen vom Typ 1 zusätzliche Eigenschaften zur Verfügung. Beispielhaft ist dies das Verfügungsstellen von Messdaten und die Durchführung von Kurzschlussabschaltungen. Bei den Grundelementen handelt es sich insbesondere um Schaltgeräte der Schaltanlage. Die Schnittstellen der Grundelemente vom Typ 1 seien mit "A" und "B" bezeichnet. Grundelemente vom Typ 2 besitzen zwei "A"-Schnittstellen. Die Grundelemente können miteinander gekettet werden, wobei jeweils die Schnittstelle A mit der Schnittstelle B verbunden wird. Es kann so eine lineare Verkettung vorgenommen werden und es sind Verzweigungen möglich. Hierbei bilden manche Bezugselemente, z.B. des Typs 2, eine Ausnahme. An ihren Schnittstellen werden stets nur Schnittstellen B angeschlossen.

Die so entstehenden Verbindungsknoten werden in zwei Typen unterschieden: Knoten mit lokaler Bedeutung und Knoten mit zentraler Bedeutung. Die Typzuordnung erfolgt per Definition aufgrund der Belange des Prozesses, auf den die Strukturierung angewandt wird. Bei der Verkettung der Elemente wird nun so vorgegangen, dass die Schnittstellen A stets auf einen zentralen Knoten hinweisen. D.h. jedes Grundelement hat eine Vorzugsrichtung - es kann quasi als polarisiert aufgefasst werden.

Bei der Einkettung der Grundelemente vom Typ 2, (Bezugselement) wird so verfahren, dass zwischen zwei solcher Grundelemente mindestens ein zentraler Verbindungsknoten liegt.

Eine Struktur aus Grundelementen der Typen 1 und 2 ist stets von zentralen Knoten eingeschlossen. Dieses Gebilde wird im weiteren mit "Grundelementgruppe" bezeichnet. An einem zentralen Knoten sind immer zwei oder mehr Grundelementgruppen angeschlossen. Gemäss voranstehendem Absatz enthält eine Grundelementgruppe immer nur ein Grundelement vom Typ 2.

Jedem Knoten wird ähnlich einem Grundelement wieder eine Beschreibung seines Zustands zugeordnet. Diese Beschreibung wird im folgenden VK-Liste genannt (Fig. 3). Aufgrund der zentralen Bedeutung der Knoten werden die Beschreibungen dieser Knoten im folgenden "zentrale VK-Listen" (ZVK-Listen) genannt. Knoten mit zentraler Bedeutung können durch Grundelemente direkt verbunden sein. Dadurch werden Eigenschaften eines Knotens an einen anderen Knoten weitergegeben. Die VK-Listen werden ausgewertet, um die gesuchte Information des Sammelschienenabbildes zu erhalten. Diese besteht aus einer dynamischen Anzahl von Listen, die jeweils eine VK-Liste oder die Summe von VK-Listen darstellen. Bezogen auf die Anwendung werden diese Listen Stromknoten-Listen genannt (SK-Listen). Sie werden ausschliesslich von ZVK-Listen zentraler Knoten gebildet. Die Erfindung wird im folgenden anhand eines in einer Zeichnung dargestellten Ausführungsbeispiels näher beschrieben, aus denen sich weitere Einzelheiten, Merkmale und Vorteile ergeben.

Es zeigen:

Fig. 1 den Aufbau eines Datensatzes für die Beschreibung von Schnittstellen beiderseits eines Grundelements.

Fig. 2 den Aufbau des zu einem Grundelement gehörenden Datensatzes,

Fig. 3 eine Darstellung einer Liste mit Datensätzen eines Teil-Verbindungsknotens,

Fig. 4 eine Darstellung einer Liste mit Datensätzen der gesamten Verbindungsknoten,

Fig. 5 ein Schaltbild einer Schaltanlage,

Fig. 6 ein Diagramm von Verfahrensschritten zur Erzeugung eines digitalen Abbilds einer Schaltanlage,

Fig. 7 ein Strukturbild der in Fig. 5 dargestellten Schaltanlage,

Fig. 8 ein Diagramm von Verfahrensschritten zur Aktualisierung eines Abbilds einer Schaltanlage,

Fig. 9 ein Blockschaltbild eines Grundelements.

Ein Datensatz für ein Grundelement, insbesondere eines Schaltgeräts geht aus Fig. 1 hervor. Der Datensatz enthält folgende Daten:

a) eine Bezeichnung oder Kennung des jeweiligen Grundelements, die in Fig. 1 und 2 mit SGK bezeichnet und fest vorgegeben ist.

b) eine Kennzeichnung des Typs des jeweiligen Grundelements. Bei Schaltgeräten gibt es z.B. Typ 1 oder Typ 2, die sich auf Trennschalter und Leistungsschalter beziehen und fest vorgegeben sind. In Fig. 1 und 2 ist dies mit SGT bezeichnet,

c) eine Bezeichnung der Messdaten; d.h. der Zuordnung zu einer Messstelle gemäss dem durchgeschalteten Grundelement vom Typ 2. Dies ist in Fig. 1 mit SGM bezeichnet.

d) eine Bezeichnung des Schaltgerätes, an das z.B. ein Schaltkommando im Kurzschlussfall gegeben wird gemäss dem durchgeschalteten Grundelement vom Typ 2. Dies ist in Fig 1 mit SGS bezeichnet.

e) Angaben über die Einbindung des jeweiligen Grundelements in die aufgebaute Struktur, Verzweigung zu einem Knoten je nach der Schnittstelle (A-Seite, B-Seite). In Fig. 1 ist dies mit SGKK bezeichnet.

f) einen Hinweis auf eine ZVK-Liste, wenn ohne über ein Grundelement vom Typ 2 zu gehen, durch das Grundelement vom Typ 1 zentrale Knoten verbunden sind. In Fig. 2 ist dies mit SGV bezeichnet.

Diese Eintragungen sind für beide Seiten der Schnittstelle, im folgenden mit A- und B-Seite bezeichnet, vorgegeben. Der vorstehend beschriebene Datensatz existiert zweimal pro Grundelement, das eine Schnittstellen (A-Seite und B-Seite für Typ 1 und zweimal A-Seite für Typ 2) bildet. Damit ist jede Schnittstelle eindeutig und vollständig definiert.

Die Datensätze der beiden Schnittstellen eines Grundelements bestehen gemäss Fig. 1 aus einem varianten und einem invarianten Teil. Invariant sind SGK, SGT und SGZK im Verweis-Block. Variant sind SGM, SGS. Variant bedeutet, dass der Informationsgehalt von Bedingungen abhängig sich ändert. Die varianten Daten werden in Abhängigkeit der Funktion des Grundelements (festgelegt durch SGT) von der einen auf die andere Seite übergeben oder wieder zurückgenommen (eintragen, löschen). Bei Kettung oder Verzweigung von Grundelementen stehen diese in einem festen Verbund zueinander. Über die Schnittstellenbeschreibung werden sie per SGKK zyklisch gekettet. Um die varianten Datensätze an der Schnittstelle identisch zu halten, muss also die Information zwischen den Schnittstellenbeschreibungen in der Reihenfolge der Kettung aktualisiert werden.

Eine grössere Unabhängigkeit ist zu erreichen, wenn die Schnittstellenbeschreibung derart gestaltet werden, dass die Grundelemente eine Beschreibung gemäss Fig. 2 aufweisen. Wie ein Vergleich zwischen Fig. 1 und Fig. 2 zeigt, stellt Fig. 2 eine Zusammenfassung der Schnittstellenbeschreibung nach Fig. 1 dar; die invarianten Daten sind nur noch einmal vorhanden. Zusätzlich wird nun der innere Zustand SGZ (bei Schaltgeräten Ein oder Aus) benötigt. Die Beschreibung nach Fig. 2 ist der Auswertefunktion eines Grundelements direkt zugewiesen, und nach aussen nicht sichtbar. Ein Grundelement ist dabei immer zwischen zwei Knoten eingebettet, die hierarchisch gegliedert sein können. Im Datensatz sind Angaben über die Verbindung zu den beiden umliegenden Knoten enthalten und mit SGVKK und SGRKK gekennzeichnet. Diese Knoten sind Verbindungsknoten mit einer Beschreibung nach Fig. 3. Das bedeutet, dass eine Struktur aufgebaut wird, die einheitlich aus Verbindungsknoten und Grundelementen besteht und an jeder Stelle nach dem gleichen Verfahren arbeitet.

Die LVK-Listen sind eine spezielle VK-Liste. Sie beschreiben die Schnittstelle zwischen Grundelementen. Ihre Struktur ist der Fig. 3 zu entnehmen. Die LVK-Listen enthalten nur einen Eintrag SGM und SGS, der vom Grundelement vom Typ 2 der betreffenden Grundelementgruppe zur Verfügung gestellt wird. SGV stellt eine Liste der zentralen Knoten dar, die, ohne über ein Grundelement vom Typ 2 zu gehen, mit dem betrachteten zentralen Knoten verbunden sind. Die LVK-Listen werden von den Auswertefunktionen der Grundelemente der betreffenden Grundelementgruppe geführt.

Die ZVK-Liste liegt ausserhalb der Grundelementgruppen und enthält von jedem Grundelement, das fest an den jeweiligen Knoten angeschlossen ist, SGM und SGS gemäss dem aktuellen Stand der Beschreibung einzelnen Grundelemente. Für SGV gilt das voranstehend gesagte.

Für das Fortpflanzen der Einträge zwischen den LVK-Listen resp. zwischen LVK-und ZVK-Listen ist, wie voranstehend bereits erwähnt, die Auswertefunktion der Grundelemente zuständig. Von Bedeutung ist hier der innere Zustand SGZ des Grundelements, das heisst des Schaltzustands bei Schaltgeräten. Die hier relevante Tätigkeit der Auswertefunktion betrifft das Überführen von Information von einer VK-Liste (LVK-Liste, ZVK-Liste) in eine andere. Die Auswertefunktion tritt hierzu dann in Aktion, wenn eine Änderung in einer der direkt angrenzenden VK-Listen erfolgte oder wenn sich der Zustand SGZ des Grundelements geändert hat. Abhängig vom jeweiligen Zustand SGZ werden die Daten SGM, SGS und SGV der entsprechenden VK-Listen behandelt:

Trigger: Änderung in einer LVK-Liste

$SGZ = 1$:

prüfen, was sich geändert hat;

der vorige Stand ist in den Nutzdaten gem. Fig. 2 gespeichert;

die Änderung in der gegenüberliegenden VK-Liste (LVK-, ZVK-Liste) eintragen

$SGZ = 0$:

aktueller Stand der Daten SGM, SGS, SGV in den Nutzdaten merken

-- keine weitere Tätigkeit --

Trigger: Änderung von SGZ

1 zu 0:

aktuelle Daten SGM, SGS, SGV von der LVK-Liste der ZVK abgewandten Seite in die LVK-Liste der ZVK zugewandten Seite oder in die direkte angrenzende ZVK-Liste übertragen.

0 zu 1:

eigene Einträge in der ZVK-Liste oder der LVK-Liste, die dem ZVK zugewandt ist, gemäss dem Stand der Nutzdaten entfernen.

Aufgrund der Struktur der VK-Listen ist es möglich, dass mehr als ein Eintrag durch die Auswertefunktionen der Grundelemente gleichzeitig durchgeführt werden kann. Somit ist sichergestellt, dass die Schaltzustandsänderungen im Prozess lokal begrenzt und parallel bearbeitet werden können. Eine Synchronisation ist erst dann notwendig, wenn die SK-listen aus den Einzelinformationen der ZVK-Listen gebildet werden.

Den Aufbau der SK-Liste zeigt Fig. 4. Sie enthalten aus den ZVK-Listen die Information SGM und SGS. Die Information um die SK-Listen aufzubauen, ist unter SGV in den ZVK-Listen enthalten. Gemäss den SGV-Listen werden die aktuellen ZVK-Listen zentraler Knoten durch eine, den SK-Listen zugeordnete Auswertefunktion in SK-Listen zusammengefasst.

Das Strukturbild gem. Fig. 7 zeigt für eine Schaltanlage Grundelemente der Typen 1 und 2, die durch Teilknoten in der dargestellten Weise miteinander verbunden sind. Ein Grundelement GII2, insbesondere ein Leistungsschalter, ist mit einem lokalen Verbindungsknoten LVK2 verbunden. An den lokalen Verbindungsknoten LVK2 sind jeweils ein Grundelement GI4 und ein Grundelement GI5 angeschlossen. Hierbei bezeichnet der Buchstabe G das Grundelement, die Ziffer I oder II den Grundelementtyp und die folgende Ziffer die Kennzeichnung. Das Grundelement GI4 ist an einen zentralen Verbindungsknoten ZVK2 angeschlossen. Das Grundelement GI5 ist mit einem zentralen Verbindungsknoten ZVK1 verbunden.

Das Grundelement GII2 ist weiterhin mit einem Grundelement GI6 verbunden, da dem ein lokaler Verbindungsknoten LVK5 angeschlossen ist, der über ein Grundelement GI7 an einen Verbindungsknoten VK5 angeschlossen ist.

Die zentralen Verbindungsknoten ZVK1 und ZVK2 sind u.a. über je ein Grundelement GI1 und GI2 mit einem lokalen Verbindungsknoten LVK1 verbunden, an den ein Zweig mit der Reihenschaltung eines Grundelements GII1 und eines Grundelements GI3 angeschlossen ist. Weiterhin stehen die zentralen Verbindungsknoten ZVK1 und ZVK2 je über ein Grundelement GI9 und GI8 mit einem lokalen Verbindungsknoten LVK3 in Verbindung, der über ein Grundelement GII3 an einen lokalen Verbindungsknoten LVK4 angeschlossen ist, der über ein Grundelement GI10 mit dem Verbindungsknoten VK5 verbunden ist. Vom lokalen Verbindungsknoten LVK5 gehen Verbindungen je zu Grundelementen GI11 und GI12 aus, die weiterhin an Verbindungsknoten VK3 und VK4 angeschlossen sind, die je über Grundelemente GI13 und GI14 mit den zentralen Verbindungsknoten ZVK1 und ZVK2 verbunden sind.

Den Schnittstellen A und B der Grundelemente GI1 bis GI14 sind jeweils Datensätzen DI1 bis DI14 zugeordnet, die den in Fig. 1 dargestellten Umfang haben. Den Grundelementen GII1 bis GII3 sind Datensätze DII1, DII2 und DII3 zugeordnet, die ebenfalls die in Fig. 2 angegebenen Bezeichnungen aufweisen.

Den lokalen Verbindungsknoten LVK1 bis LVK5 sind jeweils LVK-Listen LVK1-L bis LVK5-L zugeordnet, die je den in Fig. 3 gezeigten Inhalt aufweisen. Den Verbindungsknoten VK3 bis VKL5 sind VK-Listen VK3-L bis VK5-L zugeordnet. Den zentralen Verbindungsknoten ZVK1 und ZVK2 sind die ZVK-Listen ZVK1-L und ZVK2-L zugeordnet. Aus den Listen ZVK1-L und VK3-L wird die Stromknotenliste SK-L gebildet.

Alle gezeichneten Grundelemente nach Fig. 7 seien ausgeschaltet, so dass keine Verbindung zentraler Knoten besteht.

Das Grundelement vom Typ 2 GII2 gehe vom Schaltzustand "AUS" nach "EIN". Es muss jetzt die Information SGM und SGS in seinen Datensatz DII2 für die Schnittstellenbeschreibung eingetragen werden, da diese Eigenschaften durch sein Einschalten zugänglich gemacht werden. Der Eintrag wird an beiden Schnittstellen identisch vorgenommen.

In der LVK-Liste des lokalen Knotens LVK2 (LVK-Liste 2) erfolgt der Eintrag SGM und SGS; SGV bleibt leer.

Nun gehe das Grundelement vom Typ 1 GI5 von dem Schaltzustand "AUS" in den Schaltzustand "EIN". GI4 sei ausgeschaltet. Aufgrund des eingeschalteten Elements GII2 sind in der Schnittstellenbeschreibung B von GI5 (DGI5) die spezifischen Daten SGM und SGS von GII2, über die LVK-Liste 2 (LVK2-L) eingetragen. Aufgrund der Schaltstellungsänderung von "AUS" nach "EIN" wird diese Information auf die A-Seite übertragen. Da die A-Seite fest an VK1 liegt und GI5 eingeschaltet ist, wird die Information "VK1" unter SGV in der LVK-Liste 2 (LVK2-L) eingetragen. Für GI4 hat der neue Eintrag in der LVK-Liste 2 keine Wirkung, da GI4 ausgeschaltet ist. Als nächster Schritt ist die ZVK-Liste 1 (ZVK1-L) zu aktualisieren. Sie beinhaltet eine Liste aller SGM und SGS der an diesem Knoten fest angeschlossnene Grundelemente. Eine Verbindung zu anderen ZVK-Listen nur über Grundelemente vom Typ 1 sei im Augenblick nicht der Fall. Durch den neuen Eintrag auf der A-Seite von GI5, wird SGM und SGS von GI5 durch die Auswertefunktion der Grundelementgruppe in die ZVK-Liste 1 aufgenommen. Als letzter Schritt müssen die SK-Listen aktualisiert werden. Da in der SGV der ZVK-Liste 1 (ZVK1-L) kein Eintrag vorhanden ist, existiert nun eine Stromknoten-Liste die identisch der ZVK-Liste 1 ist.

Für das Sammelschienenabbild (Summe der Stromknoten-Listen) bedeutet also die Änderung bei GI5, dass in einer Stromknoten-Liste neue Datenpunkte eingetragen sind. Die Anzahl der Stromknoten-Listen hat sich aber nicht geändert.

Als nächstes ändere sich der Schaltzustand von GI4 von "AUS" nach "EIN". Daraus resultieren folgende Einträge:

1. GI4:

SGM und SGS der B-Seite wird auf die A-Seite übertragen;

da GI4 mit der A-Seite an dem zentralen Knoten ZVK2 liegt, wird "ZVK2" in die LVK-Liste 2 unter SGV eingetragen;

da in der LVK-Liste 2 unter SGV noch ein anderer zentraler Knoten eingetragen ist, ausser dem GI4 bekannten "ZVK2", wird auf der A-Seite unter SGZK auf LVK-Liste2.SGV verwiesen; Damit liegt eine Änderung des Informationsgehalts des lokalen Knotens LTK2 vor, es müssen nun die Schnittstellen der am LTK2 liegenden Grundelemente überprüft werden, ob Nachträge erforderlich sind:

2. GI5:

Massgeblich ist die neue Information "ZVK2", die unter SGV in der LVK-Liste 2 eingetragen ist:

5

da GI5 eingeschaltet ist, erfolgt der auf die LVK-Liste2.SGV verweisende Eintrag unter SGZK auf der A-Seite;

3. GII2:

Änderung ist nicht relevant, kein Eintrag in der Schnittstellenbeschreibung; Nachführend der VK-Listen ZVK-Liste 1 und ZVK-Liste 2 durch Prüfen der Einträge unter SGZK der Grundelemente durch die Auswertefunktion der Grundelementgruppe:

4. ZVK-Liste 1:

die Einträge SGM und SGS bleiben unverändert;

Eintrag, dass VK2 ohne über ein Grundelement vom Typ 2 zu gehen an VK1 liegt:

SGV beinhaltet den Eintrag "ZVK2";

5. ZVK-Liste 2:

die spezifischen Daten SGM und SGS von GII2 werden eingetragen;

Eintrag, dass VK1 ohne über ein Grundelement vom Typ 2 zu gehen an VK2 liegt;

SGV beinhaltet den Eintrag "ZVK2"; Nachführend der Stromknoten-Listen:

6. dadurch, dass auf den A-Seiten der Grundelemente GI4 und GI5 jeweils fremde Knoten genannt sind, werden die VK-Listen ZVK-Liste 1 und ZVK-Liste 2 in eine einzige Stromknoten-Liste eingetragen; die bisher vorhandenen Stromknoten-Listen sind nicht mehr gültig und werden verworfen.

Das nun neue Sammelschienenabbild (Summe der Stromknoten-Listen) besitzt nun sowohl neue Datenpunkte als auch eine neue Struktur.

Hieraus ist zu entnehmen, dass eine Änderung, die einem Grundelement zuordenbar ist, sich auf einen oder mehrere zentrale Punkte zu entwickelt. Es müssen hierbei nur die Elemente der Struktur angefasst werden, die auf dem Pfad zu dem entsprechenden zentralen Punkt liegen. Parallel liegende Zweige müssen nicht behandelt werden.

Auf dieser Basis kann für die Auswertung mit informationstechnischen Methoden eine Struktur aufgebaut werden, bei der einzelne Änderungen der Grundelemente, dies kann sowohl Änderungen des Zustands als auch Änderungen der Eigenschaften betreffen, nur lokale Bedeutung besitzen. Weiter hat eine derartige Struktur die Eigenschaft, an jeder beliebigen Stelle auftrennbar und/oder erweiterbar zu sein, ohne dass die bereits bestehende Struktur und Auswertefunktionen geändert werden müssen

## Anwendung auf Schaltanlagen

Sind die Grundelemente in dieser Struktur allgemein Schaltgeräte in einer Schaltanlage, ist eine Struktur erstellbar, die die Eigenschaften einer Schaltanlage bzgl. des Weiterleitens des elektrischen Potentials wiederspiegelt. Schaltungsänderungen im realen Prozess sind hier eins-zu-eins auf die interne Struktur abbildbar. Einem zentralen Bezugspunkt der Polarisationsrichtung der Grundelemente entspricht in diesem Fall jeweils eine Sammelschiene.

Das Sammelschienenabbild basiert dabei wie bisher auf den Meldungen der jeweiligen Position der Schaltkontakte der Schaltanlage, so dass von dieser Seite keine neuen Anforderungen an die Schaltgeräte bestehen. In erster Linie werden alle Sammelschienentrennschalter ausgewertet. In den Abzweigen, bei denen aufgrund ihres Aufbaus und Einbindung in die Schaltanlage eine Kupplung von Sammelschienen möglich ist, werden alle Schaltgeräte, die im möglichen Kupplungspfad liegen, erfasst. Dabei werden die relevanten Schaltgeräte in zwei Klassen eingeteilt und bezüglich ihrer Auswertung unterschiedlich behandelt:

- Klasse der Trennschalter (ohne Erdungsschalter),

entsprechen dem Grundelement Typ 1;

- Klasse der Leistungsschalter,

entsprechen dem Grundelement Typ 2.

Eine Konfigurationsrechnung wird ausgelöst durch eine sich anbahnende oder erfolgte Änderung des aktuellen Schaltzustandes eines oder mehrerer Schaltgeräte. Die Behandlung der Änderung korrespondiert hierbei mit der Topologie der Schaltanlage Das bedeutet, dass die Auswertung einer Änderung nur in den Bereichen durchgeführt werden, in denen sie auch tatsächlich wirksam ist. Die Auswertung beginnt bei dem Schaltgerät (SG-Element = Grundelement vom Typ n) bei dem die Schalterstellungsänderung detektiert wurde. Liegt nach der Auswertevorschrift eine Auswirkung auf die Umgebung vor, bedeutet dies eine Aktualisierung der Schnittstellenbeschreibung. Gemäss der topologischen Einbindung des jeweiligen SG-Elements wird die Fortpflanzung der Änderung kontrolliert, bis ein SG-Element erreicht ist, das direkt mit einer Sammelschiene verbunden ist (zentraler Knoten ZVK). Diese SG-Elemente stellen die Grenze eines Schaltfeldes dar und bilden die Basisstruktur. Nun wird Information bzgl. der Messtelle des Schaltfeldes an den zentralen Knoten (=einzelner Sammelschienenabschnitt) weitergegeben. Für jeden zentralen Knoten wird eine Verbindungsknoten-Liste (ZVK-Liste) geführt, die aussagt, welche Messtellen und Leistungsschalter zu der entsprechenden Sammelschiene aktuell gehören. Wie die Sammelschienen können die zentralen Knoten-Listen via SG-Elemente zu grösseren Gebilden zusammengeschlossen werden. Schlägt also eine Schalterstellungsänderung bis auf die Sammelschiene durch, wird kontrolliert ob die ZVK-Liste mit anderen verbunden ist oder nun verbunden werden muss. Ist dies der Fall, so wird aus den entsprechenden ZVK-Listen die Stromknoten-Liste (SK-Liste) zusammengestellt. Eine Stromknoten-Liste enthält immer mindestens die Elemente einer ZVK-Liste. Aus ihr ist die vollständige Zuordnung der Messtellen und Leistungsschalter zu den Schutzbereichen zu entnehmen. Für eine Schaltanlage können maximal soviele Stromknoten-Listen existieren, wie Sammelschienenabschnitte vorhanden sind.

Ereignen sich mehrere Änderungen in verschiedenen Schaltfeldern einer Schaltanlage, ergibt sich durch die vorliegende Struktur eine Aufteilung der Konfigurationsrechnung in einzelne Teilrechnungen, die jeweils als eigenständige Auswertung aufgefasst werden können. Wie aufgeführt, müssen nur die auf dieser Verbindungslinie von dem Schaltgerät, dem die Änderung zugeordnet wurde, zum Stromknoten Elemente ausgewertet werden. Die Ergebnisse der Teilrechnungen laufen in den Auswertungen für die zentralen Knoten-Listen zusammen und werden dort synchronisiert, bevor die Erstellung der SK-Listen erfolgt.

## Beispielhafte Beschreibung der Vorgehensweise

Für jedes Grundelement (Schaltgerät) wird eine Schnittstellenbeschreibung, wie oben beschrieben, festgelegt. Zur Realisierung wird der Datensatz so aufgebaut, dass für das SG-Element keine redundante Information gehalten wird. Es liegt somit (gem. Bild 2) eine Unterteilung in
- einen SG-Element spezifischen Teil: Beschreibung und Nutz-Daten
- eine Beschreibung der vorwärtsgerichteten Schnittstelle: Vorverweis
- eine Beschreibung der rückwärtsgerichteten Schnittstelle: Rückverweis
vor. Im Vergleich zu Bild 1 wird zusätzlich die Beschreibung des Zustandes des SG-Elements benötigt. Der Verweis auf eine starre Verbindung zentraler Knoten wird unter "Verbindung zu zentralen Knoten" (SGV) geführt. Für den Aufbau des Sammelschienenabbildes sind die wesentlichen Informationen enthalten in
- "Zustand" (SGZ) - 1/0
Bedeutung: Schnittstelleninformation auswerten ja/nein ("Konfigurationsrechnung notwendig")
sowie die Nutz-Daten:
- "Messtelle (SGM) - Kennung
Bedeutung: auszuwertende Messtelle
- "Kommando-Schaltgerät" (SGS) - Kennung
Bedeutung: Schaltgerät, an das das AUS-Kommando im Fehlerfall zu geben ist; korrespondierte direkt mit der auszuwertenden Messtelle.
- "Verbindung zentralen Knoten" (SGVW) - Verweis
Bedeutung: Verweis auf das Verzeichnis der mit diesem Punkt starr verbundenen Sammelschienen (starr: im Fehlerfall nicht auftrennbar).

Die funktionalen Zusammenhänge werden an den Bildern "SSAbbild aufbauen" (Fig. 6) und "Konfigurationsrechnung durchführen" (Fig. 8) erläutert.

## Erläuterung der Funktionsweise

Wird gem. Fig. 6 in einem Verfahrensschritt 1 eine Änderung einer Schalterstellung festgestellt ("Änderungsstellung erkennen") und lässt sich diese in einem Verfahrensschritt 2 einem Schaltgerät ("Änderung zuordnen") einem Schaltgerät zuordnen, wird nach festgelegten, auf die Klasse des Schaltgerätes bezogenen Regeln festgestellt, ob diese Schalterstellungsänderung eine Änderung der Schnittstellebeschreibung notwendig macht. Nur wenn dies der Fall ist, wird in einem Verfahrensschritt 3 die neue Eintragung vorgenommen ("Schnittstelle Schaltgerät berechnen") und die nächsten Bearbeitungsschritte ausgeführt. Im folgenden muss nun geprüft werden, wie weit sich die neue Information fortpflanzt und ob sie letztendlich in eine Stromknoten-Liste (SK-Liste) mündet. Dies ist abhängig von dem Zustand der mit diesem Schaltgerät direkt verbundenen Schaltgeräte, bzw. davon, ob es direkt an eine Sammelschiene angeschlossen ist (= Sammelschienentrenner). In einem weiteren Verfahrensschritt 5 "Konfigurationsrechnung durchführen" wird diese Auswertung von einem Verfahrensschritt 5.1 "Fortpflanzung berechnen" durch die Angabe unter SGT, vorgenommen. Wurden lokale Knoten-Listen geändert und sind von dort Verbindungen zu zentralen Knoten vorhanden, werden im folgendem Verfahrensschritt "Knoten aktualisieren" die ZVK-Liste(n) und SK-Listen entsprechend geändert. Die Leistungsschalter werden überwacht. Bei Ausfall eines Leistungsschalters wird in einem Verfahrensschritt 4 ein Ersatzleistungsschalter ausgewählt. Die entsprechende Änderung wird in den Angaben über die Schnittstelle berücksichtigt.

Es liegt also eine hierarchische Gliederung der Datengruppen vor. Sie stellt sich wie folgt dar:

| Art | Zuordnung | Anzahl | Bestimmung des Inhalts |
|---|---|---|---|
| SG-Elemente (Grundelemente) | zu jedem Schaltgerät | anlagenspezifisch unabhängig vom Schalterzustand | Basis sind Schalterstellungsmeldungen, Auswertung ist abh. vom Schaltgerätetyp |
| LVK-Liste | zu jedem Verbindungspunkt zw. Schaltgeräten | anlagenspezifisch | werden gebildet aus den Schnittstellenbeschreibungen der Grundelemente; allgemeingültige Regel |
| ZVK-Liste | zu jeder Sammelschiene | anlagenspezifisch pro Sammelschiene | wird aus den SG-Elementen gebildet; allgemeingültige Regel |
| SK-Liste | zur Schaltanlage | abhängig vom jew. Schaltzustand der Schaltanlage;<br>min.: keine<br>max.: Anzahl der Sammelschienen | wird aus den ZVK-Listen gebildet; allgemeingültige Regel |
| Das Sammelschienenabbild wird durch die Summe der SK-Listen dargestellt. | | | |

## Typabhängige Regel

Für die Einträge in die den Schaltgeräten zugeordneten Schnittstellenbeschreibungen wird zwischen den beiden Typen Trennschalter und Leistungsschalter unterschieden.

Bzgl. der Auswertefunktion für die Einträge in die ZVK-Listen, wird zwischen Sammelschienen-Abgänge und Kuppelfelder unterschieden.

## Erstellung und Auswertung der Listen

Bezugsbasis ist ein Blindschaltbild gem. Fig. 5. Dargestellt ist ein Ausschnitt einer Schaltanlage. Z.b. das 110kV-Abgangsfeld = E3 und das Kuppelfeld = E4 mit den Sammelschienentrennschaltern Q1, Q2, Q10, Q20, jeweils dem Leistungsschalter Q0 und dem Abgangserder Q8. Das Abgangsfeld = E3 sei nur an die Sammelschiene SS1A geschaltet; d.h. der Q1 in diesem Feld sei geschlossen, der Q2 sei offen, der Q0 sei eingeschaltet, der Q9 ebenfalls und der Q8 sei offen. Die beiden letzten Schaltgeräte werden jedoch im weiteren nicht mehr beachtet. Im Kupplungsfeld = E4 seien alle Schaltgeräte ausgeschaltet.

Für die vorliegende Konfiguration existieren folgende Datengruppen:

SG-Elemente: für jedes Schaltgerät;

= E3: insgesamt 3

(Typ 1:2; Typ 2:1)

= E4: insgesamt 7

(Typ 1:6; Typ 2:1)

LVK-Listen: für jede Sammelschiene;

LVK-Liste = E31 (Knoten: Q1, Q2, Q0)

LVK-Liste = E41 (Knoten: Q1, Q2, Q0)

LVK-Liste = E42 (Knoten: Q10, Q20, Q0)

ZVK-Listen: für jede Sammelschiene;

ZVK-Liste #SS1A

ZVK-Liste #SS2A

ZVK-Liste #SS1B

ZVK-Liste #SS2B

SK -Listen: max. 4, eine pro Sammelschiene

oder gem. Kupplung von Sammelschienen

Die Verbindungsknoten-Liste der Sammelschiene SS1A (ZVK-Liste #SS1A) enthält somit, auf den Ausschnitt in Bild 6 = E3 + Q0. Die Stromknoten-Liste der Sammelschiene SS1A SK-Liste 1 ist identisch mit der VK-Liste #SS1A, da keine Verbindungen zu anderen Sammelschienen bestehen. Es werden keine weiteren SK-Listen betrachtet, ausser der, die die Einträge der Sammelschiene SS2B enthält. Diese sei mit SK-Liste 2 bezeichnet; sie enthält (noch) keinen Eintrag vom Kuppelfeld = E4.

Für den vorliegenden Ausschnitt einer Schaltanlage werden zwei Grundelementgruppen gebildet. Die eine Gruppe beinhaltet alle Elemente, die dem Schaltfeld = E3 zuzuordnen sind; die andere Gruppe die Elemente, die dem Kuppelfeld = E4 zugeordnet sind. Die Auswertefunktionen der Grundelementgruppen, die die Einträge in die ZVK-Listen vornehmen seien mit AFkt = E3 und AFkt = E4 bezeichnet.

Das Ziel der folgenden Schalthandlung soll die Kupplung der Sammelschienen SS1A und SS1B mittels dem Längstrenner Q11 sein. Dazu sind im Kuppelfeld = E4 schrittweise folgende Schaltungen vorzunehmen:

    1. SS-Trenner Q1 einschalten,

    2. SS-Trenner Q10 einschalten,

    3. Leistungsschalter Q0 einschalten,

    4. Längstrenner Q11 einschalten,

    5. Leistungsschalter Q0 ausschalten,

    6. SS-Trenner Q1 ausschalten,

    7. SS-Trenner Q10 ausschalten,

Gemäss den einzelnen Schritten werden nun die Daten der SG-Elemente des Kuppelfeldes belegt. Für das Kuppelfeld gilt, dass das Schaltfeld erst dann als an eine Sammelschiene geschaltet gilt, wenn mindestens eine durchgehende Verbindung zwischen zwei Sammelschienen hergestellt ist. D.h. wenn z.B. die Schaltgeräte Q1, Q10 und Q0 eingeschaltet sind. Erst dann erfolgt der Eintrag der Messtelle und des Leistungsschalters (Kommando-Schaltgerät) des Kuppelfeldes durch AFkt = E4 in die entsprechenden ZVK-Listen. Bei den oben genannten Schaltgeräten sind dies die ZVK-Liste SS1A und die ZVK-Liste SS1B. Durch die Kombination Messtelle = E4 + T1 und Leistungsschalter = E4 + Q0 können die Stromknoten SS1A und SS1B weiterhin als eigenständige Stromknoten gehandhabt werden. Die Einträge werden in die SK-Liste 1 und SK-Liste 2 übernommen; die Messtelle = E4 + T1, wird also von zwei Seiten ausgewertet.

Wird nun der Längstrenner Q11 geschlossen, sind die Sammelschienen SS1A und SS1B starr gekuppelt. Der Leistungsschalter und die Messtelle des Kuppel feldes sind durch den Längstrenner überbrückt und damit wirkungslos. Die Sammelschienen SS1A und SS1B müssen jetzt als ein Stromknoten behandelt werden. Durch die Auswertefunktion AFkt = E4 wird der Eintrag bzgl. Messtelle und Leistungsschalter in den betreffenden ZVK-listen entfernt und die starre Kupplung vermerkt (Eintrag-SGV). Diese Änderung wird durch die Auswertefunktion der ZVK-Listen in die SK-Listen eingetragen.

Bei der Auswertung der VK-Listen zur Bildung der SK-Listen (real existierende Stromknoten) bewirkt dies, dass nun die SK-Liste 1 und SK-Liste 2 quasi vereint werden in eine einzige Liste. In dieser sind alle Messtellen enthalten, die per Sammelschienentrenner an die Sammelschiene SS1A oder SS1B geschaltet sind; weiterhin die zugehörigen Leistungsschalter. Vom Kuppelfeld sind keine Angaben mehr enthalten. Eine Änderung des Eintrags aus der Sicht des Kuppelfeldes erfolgt erst wieder, wenn der Längstrenner Q11 ausgeschaltet wird. Das Ausschalten der Sammelschienentrenner und des Leistungsschalters hat keinen Einfluss auf das Sammelschienenabbild.

3 Schalterversagerschutz, Ersatzschaltermethode

Von Leistungsschaltern stehen, insbesondere in gasisolierten Schaltanlagen, Meldekontakte zur Verfügung, die Auskunft geben, inwieweit das Schaltgerät Schalthandlungen ausführen kann. Für den Schutz sind hiervon die Meldungen von Interesse, die signalisieren, dass eine AUS-Schaltung nicht mehr durchgeführt werden kann. Sofern diese Information zur Verfügung steht, kann sie bei der Erstellung des Sammelschienenabbildes berücksichtigt werden. Das bedeutet, dass geprüft wird, ob der einer Messstelle zugeordneter Leistungsschalter in der Lage ist, einen Kurzschluss abzuschalten. Ist dies nicht der Fall, wird aus einer projektierten Liste ein Ersatzschalter ausgewählt, der im Fehlerfall anstelle des defekten Leistungsschalters mit dem AUS-Kommando beaufschlagt wird. Der Ersatzschalter wird meistens ein Schaltgerät einer Gegenstation sein. Dies bedingt allerdings, dass ein Übertragungskanal für ein Mitnahmebefehl dorthin besteht. Es steht somit eine Funktion zur Verfügung, mit der ein vorgezogener Schalterversagerschutz realisierbar ist.

Information über die Schaltfähigkeit eines Leistungsschalters kann auf zwei weitere Arten erhalten werden:

- durch Überwachung, ob ein Leistungsschalter ein Kommando ordnungsgemäss ausführt; ein Schalterversagen kann eine Quittiereingabe durch das Betriebspersonal verlangen, aus der hervorgeht, dass der Leistungsschalter wieder seine Aufgabe wahrnehmen kann; bis diese Quittierung vorliegt wird der Leistungsschalter als defekt gekennzeichnet und für Schutzkommandos sein Ersatzschalter eingesetzt;

- durch eine externe Diagnosefunktion, deren Ergebnisse an den Sammelschienenschutz übertragen werden.

Damit wird eine Konfigurationsrechnung dadurch ausgelöst,

1. wenn eine Schalterstellungsänderung vorliegt,

**oder**

2. wenn der Ausfall eines leistungsschalters gemeldet wird und statt dessen ein Ersatzschalter nachzutragen ist.

Die Fig. 9 zeigt den Aufbau eines Grundelements 6 aus einem varianten Datensatzteil 7, einem invarianten Datensatzteil 8 und aus einem Auswertefunktionsteil 9. Die in Fig. 7 dargestellten Grundelemente, zum Beispiel GI oder GII haben den in Fig. 9 dargestellten Aufbau.

Der Datensatz gemäss Fig. 2 kann als Record in PLM oder Pascal deklariert werden, wobei die Beschreibung, die Nutz-Daten und der Verweis-Block Unter-Records sind.

## Ansprüche

1. Verfahren zum Erzeugen eines digitalen Abbilds einer mindestens eine Sammelschiene und Schaltgeräte enthaltenden Schaltanlage in einem elektrischen Energieverteilungsnetz,
**dadurch gekennzeichnet,**
dass den Schaltgeräten jeweils Datensätze zugeordnet sind, die für jede Anschlussseite gesondert eine individuelle Bezeichnung des Schaltgeräts, dessen Typ aus einer in der Schaltanlage eingesetzten unterschiedlichen Auswahl von Typen, dessen Schaltzustand, die Zuordnung zu einer Messstelle, die Zuordnung zu einem in Abhängigkeit vom Messstellenwert betätigbaren Kommando-Schaltgerät, die Zuordnung zu dem im Zuge der Leitung nächstliegenden lokalen Verbindungsknoten oder zentralen Verbindungsknoten und die Zuordnung des lokalen Verbindungsknotens zu einem zentralen Verbindungsknoten enthalten, dass für die Verbindungsknoten Listen mit an diese angeschlossenen Messstellen und den zugehörigen Kommando-Schaltgeräten sowie den Verbindungen zu übergeordneten zentralen Verbindungsknoten vorgesehen sind, dass eine Liste mit den zentralen Verbindungsknoten, die die Messtellen mit den zugeordneten Kommando-Schaltgeräten enthält, vorgesehen ist, und dass bei Schaltzustandsänderungen die entsprechenden Eintragungen in den Datensätzen einschliesslich der hiervon ausgehenden Änderungen der Eintragungen in der Liste der Verbindungsknoten und/oder zentralen Verbindungsknoten berücksichtigt werden.

2. Verfahren nach Anspruch 1,
**dadurch gekennzeichnet,**
dass ein invarianter Datensatzteil die Bezeichnung, den Typ und einen Verweis auf diejenigen Verbindungsknoten-Listen, in denen Angaben über das Schaltgerät enthalten sind, aufweist, dass ein varianter Datensatzteil den Zustand des Schaltgeräts, die Messstelle, das Kommando-Schaltgerät und die Verbindung zu den zentralen Verbindungsknoten enthält, und dass ein Auswertefunktionsteil die Überwachung des Schaltgerätezustands und die Einträge in den Verbindungsknoten-Datensatzteil überwacht und anpasst.

3. Verfahren nach Anspruch 1 oder 2,

**dadurch gekennzeichnet,**

dass Stellungsmeldungen der Schaltanlage fortlaufend überwacht werden, dass bei Schaltzustandsänderungen diese den jeweiligen Datensätzen zugeordnet werden, und dass bei Änderungen der Datensätze der Schnittstellen, den geänderten Verbindungen zu den Verbindungsknoten und/oder zentralen Verbindungsknoten entsprechende Änderungen in lokalen und/oder zentralen Verbindungsknoten-Listen durchgeführt werden.

4. Verfahren nach einem oder mehreren der vorhergehenden Ansprüche,

**dadurch gekennzeichnet,**

dass bei Änderung des Schaltzustandes von "AUS" nach "EIN" die Bezeichnungen der Messtellen und Kommando-Schaltgeräte auf die dem vorgeschalteten lokalen Verbindungsknoten entsprechende Seite des Schnittstellendatensatzes übernommen werden.

5. Verfahren nach einem oder mehreren der vorhergehenden Ausprüche,

**dadurch gekennzeichnet,**

dass in Abhängigkeit des Schaltzustands bei Änderung des Schaltzustands - AUS nach EIN: eintragen; EIN nach AUS: löschen/austragen - eines zwischen Verbindungsknoten angeordneten Schaltgeräts in die Liste des lokalen Verbindungsknotens der Hinweis auf den zentralen Verbindungsknoten eingetragen wird.

6. Verfahren nach einem oder mehreren der vorhergehenden Ausprüche,

**dadurch gekennzeichnet,**

dass als Typen Leistungsschalter und Trennschalter vorgesehen sind.

7. Verfahren nach einem oder mehreren der vorhergehenden Ansprüche,

**dadurch gekennzeichnet,**

dass zwischen zwei Leistungsschaltern ein zentraler Verbindungsknoten vorgesehen ist.

8. Verfahren nach einem oder mehreren der vorhergehenden Ansprüche,

**dadurch gekennzeichnet,**

dass die Einträge der Bezeichnung der Messdaten, der Bezeichnung des Schaltgeräts, und der Hinweise auf eine zentrale Verbindungsknoten-Liste in den Verbindungsknoten-Listen unabhängig voneinander sind.

# FIG.1

SG-Element

Beschreibung

| Kennung | (SGK) |
|---------|-------|
| Typ | (SGT) |

Ansprache SG-Elements;

SG-Klasse,
SS-Zugehörigkeit;

Nutz-Daten

| Meßstelle | (SGM) |
|-----------|-------|
| Kommando-Schaltgerät | (SGS) |

Ansprache Meßstelle;

Ansprache LS

Verweis-Block

| Kennung Knoten | (SGKK) |
|----------------|--------|
| zentrale Knoten | (SGZK) |

# FIG.2

**Beschreibung**

| Kennung | (SGK) |
|---|---|
| Typ | (SGT) |
| Zustand | (SGZ) |

Ansprache SG-Elements

SG-Klasse,
SS-Zugehörigkeit;
EIN/AUS

**Nutz-Daten**

| Meßstelle | (SGM) |
|---|---|
| Kommando-Schaltgerät | (SGS) |
| Verbindung zu ZVK's | (SGV) |

Ansprache Meßstelle;

Ansprache LS

wenn starr gekuppelte
Sammelschienen:
Verweis auf LVK-Liste

**Verweis - Block**

Vorverweis

| Kennung Knoten | (SGVKK) |
|---|---|

Verweis auf den
entsprechenden VK

Rückverweis

| Kennung Knoten | (SGRKK) |
|---|---|

Verweis auf den
entsprechenden VK

# FIG.3

Verbindungsknotenliste

Teilknoten:   VK-Liste n

┌─Grundelement n───────────
│  ┌──────────────────────────┐
│  │ Meßstelle                    (SGM) │
│  ├──────────────────────────┤
│  │ Kommando-Schaltgerät (SGS) │
│  └──────────────────────────┘

.
.
.

┌──────────────────────────┐
│ Verbindung zu ZVK's    (SGV) │
└──────────────────────────┘

# FIG.4

Stromknotenliste, Zusammenfassung von
miteinander verbundenen Teilknotenlisten

Strom-Knoten: SK-Liste n

┌─────────────────────┬──────────────┐
│ Meßstelle   (SGM) │ KdoSG (SGS) │
└─────────────────────┴──────────────┘
         . . .

# FIG. 5

Legende :　⊥ : Trenner　　　　§ : Stromwandler

　　　　　▯ : Leistungschalter　⏚ : Erdung

Abkürzungen :
SF　　　= Schaltfeld
SG　　　= Schaltgerät
SS　　　= Sammelschiene
VK-Liste = Verbindungsknoten Liste
LVK　　= lokaler Verbindungsknoten
ZVK　　= zentraler Verbindungsknoten
SK-Liste = Stromknoten Liste
Tr　　　= Trenner
LS　　　= Leistungsschalter
Kdo　　= Kommando

# FIG.6

SS Abbild aufbauen

Stellungsmeldungen Prozeß

Änderung liegt vor

Änderung Stellung erkennen — 1

Änderung zuordnen — 2

Neue Schnittstelle berechnen

Stellungsmeldung Schaltgerät

Schnittstelle Schaltgerät berechnen — 3

Leistungsschalter ausgefallen

Konfigurationsrechnug notwendig

Überwachungs- meldungen Prozeß

ausgewählter Ersatzschalter

Sammelschienen Abbild

Schnittstellen- Beschreibung

Ersatzschalter auswählen — 4

Konfigurationsrechnung durchführen — 5

Ersatzschalter

Schaltanlagenstruktur

FIG.7

EP 0 384 307 A1

Legende — ZVK-Liste, LVK-Liste, SK-Liste (Beispiel)

Grundelement Typ 1
Grundelement Typ 2
SG-Element (Schnittstellenbeschreibung Grundelement)
Endpunkt der betrachteten Struktur

# FIG. 8

Konfiguratiosrechnung durchführen

Schnittstellen
Beschreibung

Neuer Eintrag

| Fortpflanzung berechnen 5.1 | - - -> | Knotenliste aktualisieren 5.2 |

Schnittstellenknoten

Schaltanlagenstruktur

Sammelschienen
Abbild

6

9 Auswertefunktion

varianter
Datensatzteil — 7

invarianter
Datensatzteil — 8

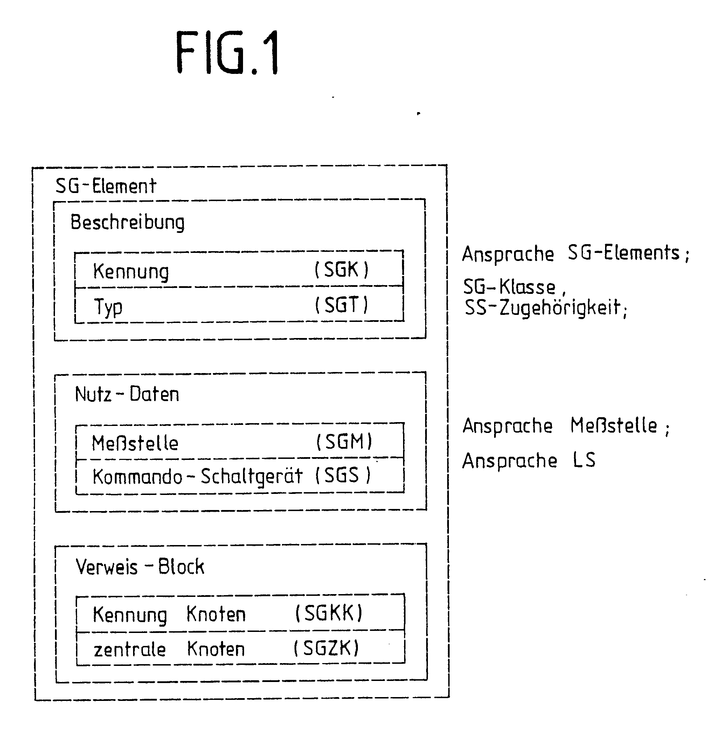

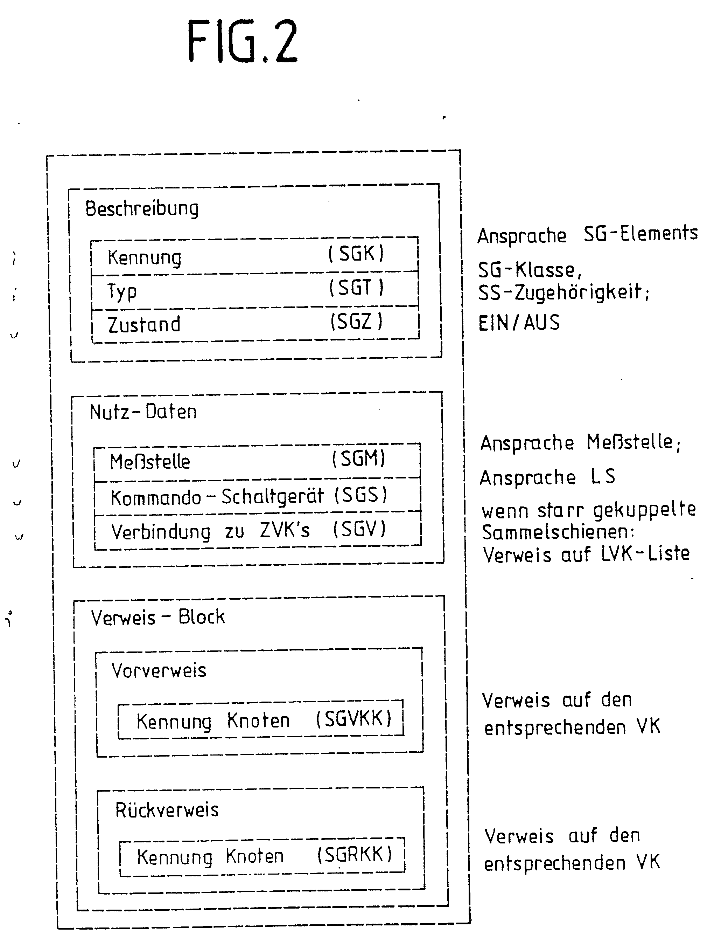

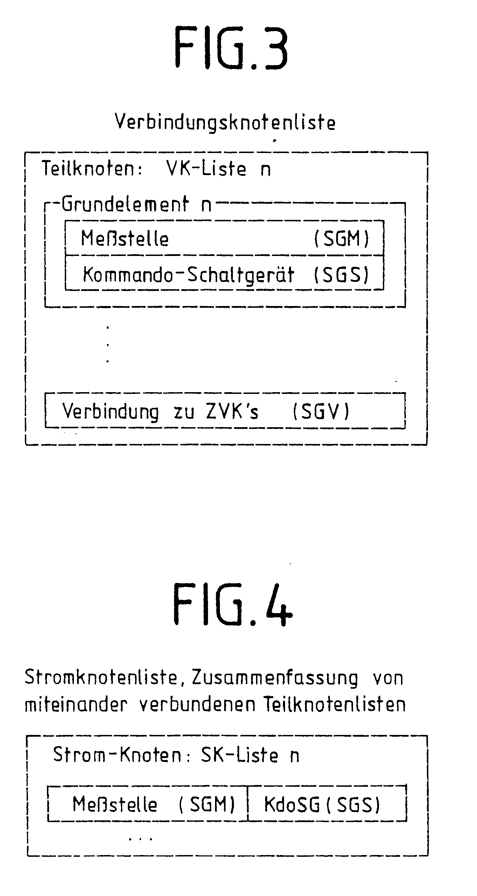

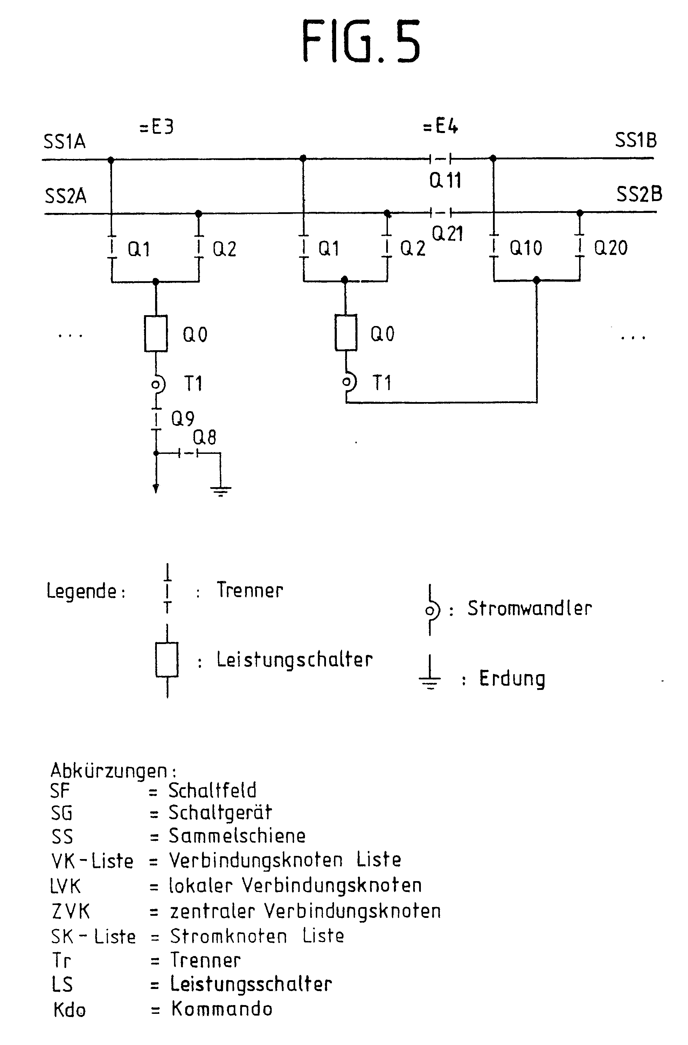

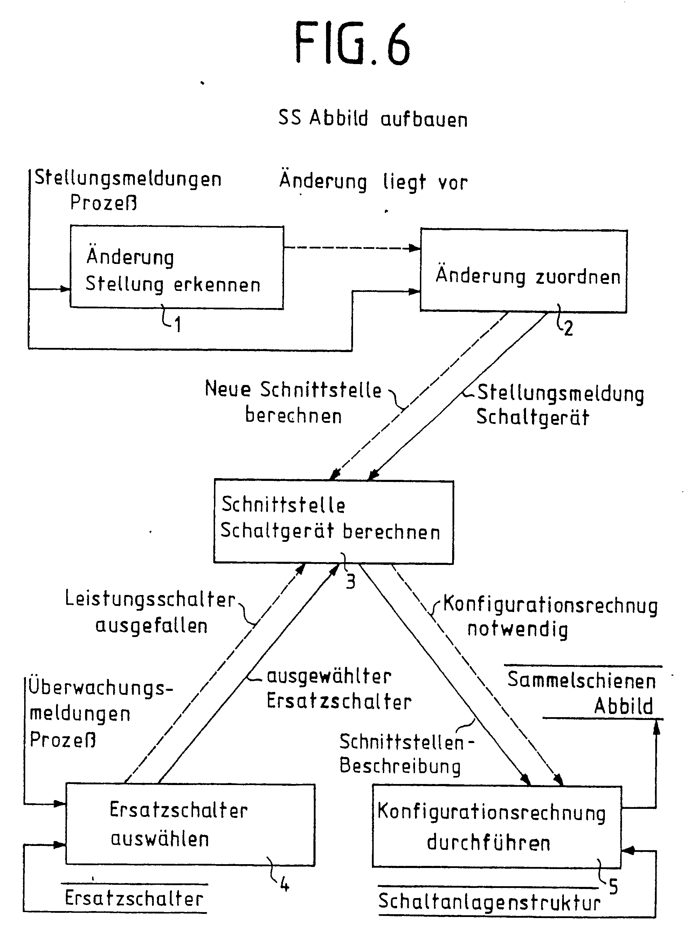

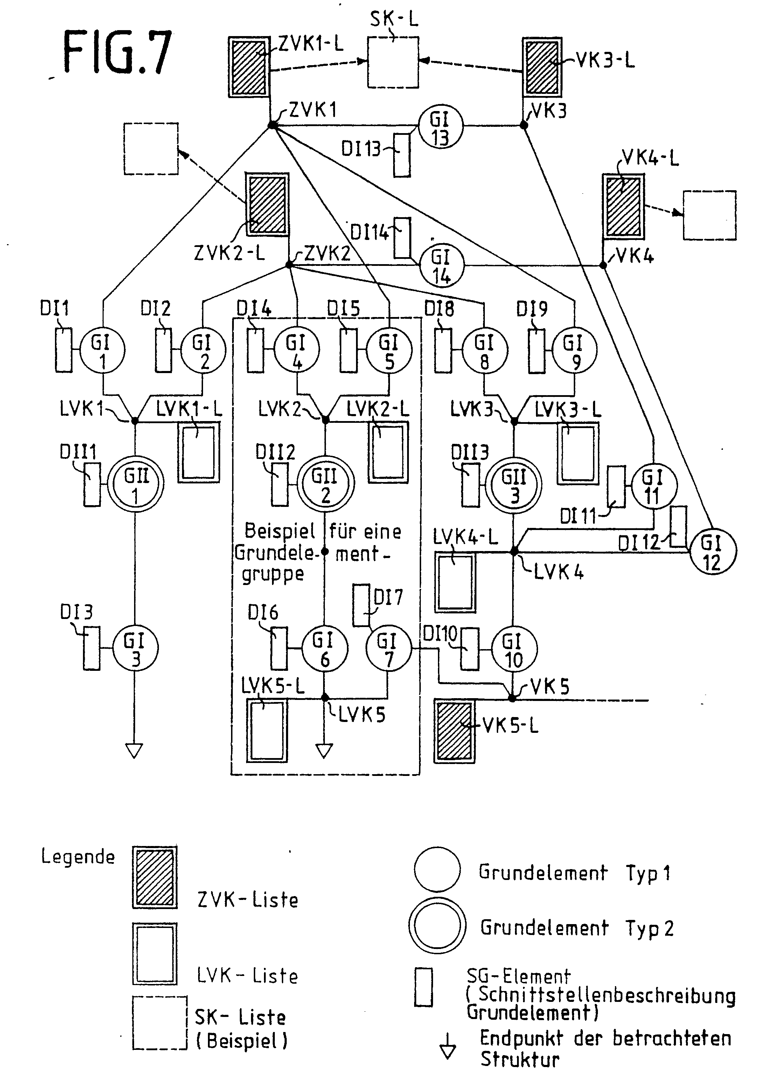

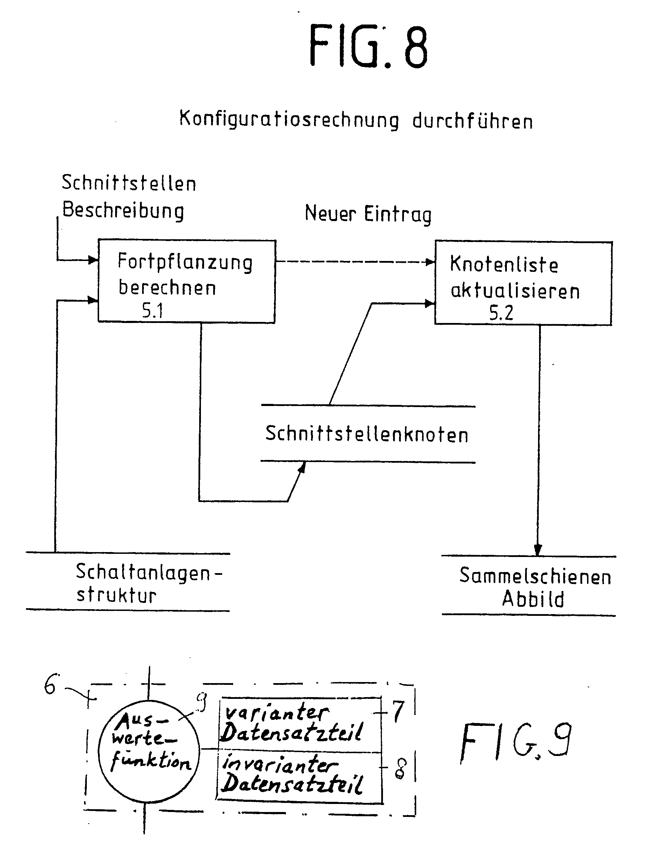

$FIG.9$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-166206 (B.B.C. AG)<br>* Seite 4, Zeile 9 - Seite 6, Zeile 34; Figur 1 * | 1 | H02J13/00 |
| A | DE-A-2607622 (B.B.C. AG)<br>* Seite 4, Absatz 3 - Seite 5, Absatz 2; Figur 1 * | 1 | |
| A | DE-A-1465953 (LICENTIA PATENT-VERWALTUNGS-GMBH)<br>* Seite 8, letzter Absatz - Seite 11, Absatz 1; Figur 1 * | 1 | |
| A | Revue Générale de l'electricité<br>no. 9, Oktober 1988, Paris,France<br>Seiten 39 - 41; R.Servet:<br>"Controle-commande des postes: l'apport des réseau locaux"<br>* das ganze Dokument * | 1 | |

**RECHERCHIERTE SACHGEBIETE (Int. Cl.5)**

H02J

Der vorliegende Recherchenbericht wurde für alle Patentansprüche erstellt

| Recherchenort | Abschlußdatum der Recherche | Prüfer |
|---|---|---|
| DEN HAAG | 08 MAI 1990 | WOODALL C.G. |